# EUROPEAN PATENT APPLICATION

(11) **EP 2 100 506 A2**
(43) Date of publication of application: **16.09.2009**
(21) Application number: 09151244.2
(22) Date of filing: 23.01.2009
(51) Int. Cl.: A01N 43/40, A01P 3/00

(54) **Uses of fluopyram**

(71) Applicant: Bayer CropScience AG, 40789 Monheim (DE)
(72) Inventor: The designation of the inventor has not yet been filed

(57) **Abstract**

The present invention relates to the use of N-{[3-chloro-5-(trifluoromethyl)-2-pyridinyl]ethyl}-2,6-dichlorobenzamide (fluopyram) and of compositions comprising fluopyram and further fungicides or insecticides for controlling undesired microorganisms or animal pests in different crops.

## Description

### Uses of Fluopyram

The present invention relates to the use of N-{[3-chloro-5-(trifluoromethyl)-2-pyridinyl]ethyl}-2,6-dichlorobenzamide (fluopyram) and of compositions comprising fluopyram and further fungicides or insecticides for controlling undesired microorganisms or animal pests in different crops.

Fluopyram is a broad spectrum fungicide with penetrant and translaminar properties for foliar, drip, drench and seed treatment applications on a wide range of different crops against many economically important plant diseases. It is very effective in preventative applications against powdery mildew species, grey mould and white mould species. It has an efficacy against many other plant diseases. Fluopyram has shown activity in spore germination, germ tube elongation and mycelium growth tests. At the biochemical level, fluopyram inhibits mitochondrial respiration by blocking the electron transport in the respiratory chain of Succinate Dehydrogenase (complex II - SDH inhibitor).

Fluopyram and its manufacturing process starting from known and commercially available compounds is described in EP-A- 1 389 614.

This invention now provides advantageous uses of fluopyram and of compositions comprising fluopyram and further active ingredients against specific pathogens and in specific crops.

In conjunction with the present invention "controlling" denotes a significant reduction of the rust infestation in comparison to the untreated crop, more preferably the infestation is essentially diminished (50-79%), most preferably the infestation is totally suppressed (80-100%).

### Specific uses of fluopyram (FLU)

In a first embodiment the present invention relates to the use of fluopyram for controlling *Podosphaera leuchotricha, Alternaria sp, Venturia sp., Stemphylium vesicarium, Gloeosporium fructigenum, Botrytis cinerea* and *Penicillium sp.* in apples and pears.

In a further embodiment the present invention relates to the use of fluopyram for controlling *Leveillula taurica, Erysiphe cichoracearum* and *Botrytis cinerea* in artichokes.

In a further embodiment the present invention relates to the use of fluopyram for controlling *Stemphylium sp* in asparagus.

In a further embodiment the present invention relates to the use of fluopyram for controlling *Mycosphaerella fijiensis* in banana.

In a further embodiment the present invention relates to the use of fluopyram for controlling *Botrytis cinerea, Sclerotinia sclerotiorum, Phoma exigua* and *Erysiphe polygoni* in beans.

In a further embodiment the present invention relates to the use of fluopyram for controlling *Botrytis cinerea, Sphaerotheca sp* .and *Alternaria sp.* in berry, such as craneberry and bushberry.

In a further embodiment the present invention relates to the use of fluopyram for controlling *Alternaria brassicae, Erysiphe polygoni, Erysiphe cruciferarum* and *Botrytis cinerea* in brassica vegetables.

In a further embodiment the present invention relates to the use of fluopyram for controlling *Botrytis cinerea* and *Sclerotinia sclerotiorum* in bulbs, such as onion.

In a further embodiment the present invention relates to the use of fluopyram for controlling *Botrytis cinerea* and *Sclerotinia sclerotiorum* in bulbs, such as garlic.

In a further embodiment the present invention relates to the use of fluopyram for controlling *Botrytis cinerea* and *Sclerotinia sclerotiorum* in bulbs, such as shallot.

In a further embodiment the present invention relates to the use of fluopyram for controlling *Helminthosporium sp, Erysiphe graminis, Oculimacula sp., Septoria tritici* and *Leptosphaeria nodorum* in cereals, such as wheat.

In a further embodiment the present invention relates to the use of fluopyram for controlling *Helminthosporium sp, Erysiphe graminis, Oculimacula sp., Septoria tritici* and *Leptosphaeria nodorum* in cereals, such as rye.

In a further embodiment the present invention relates to the use of fluopyram for controlling *Helminthosporium sp, Erysiphe graminis,* Rhynchosporium secalis in cereals, such as summer or winter barley.

In a further embodiment the present invention relates to the use of fluopyram for controlling *Helminthosporium sp, Erysiphe graminis, Oculimacula sp., Septoria avenae* in cereals, such as oat.

In a further embodiment the present invention relates to the use of fluopyram for controlling *Helminthosporium sp, Erysiphe graminis, Oculimacula sp., Septoria tritici* and *Leptosphaeria nodorum* in cereals, such as triticale.

In a further embodiment the present invention relates to the use of fluopyram for controlling *Erysiphe cichoracearum, Sclerotinia sclerotiorum, Phoma exigua* and *Alternaria dauci* in chicory.

In a further embodiment the present invention relates to the use of fluopyram for controlling *Erysiphe cichoracearum, Sclerotinia sclerotioru , Phoma exigua* and *Alternaria dauci* in witloof.

In a further embodiment the present invention relates to the use of fluopyram for controlling *Elsinoe fawcettii* and *Alternaria alternata* in citrus.

In a further embodiment the present invention relates to the use of fluopyram for controlling *Ramularia sp.* and *Glomerella sp.* in cotton.

In a further embodiment the present invention relates to the use of fluopyram for controlling *Botrytis cinerea, Sclerotinia sclerotiorum, Sphaerotheca fuliginea* and *Erysiphe cichoracearum* in cucurbits.

In a further embodiment the present invention relates to the use of fluopyram for controlling *Botrytis cinerea, Erysiphe necator, Guignardia bidewellii, Phomopsis viticola, Aspergillus sp.* and *Penicillium sp.* in grapes.

In a further embodiment the present invention relates to the use of fluopyram for controlling *Erysiphe sp.* and *Botrytis cinerea.* in ginseng.

In a further embodiment the present invention relates to the use of fluopyram for controlling *Powdery mildew, Botrytis cinerea* and *Alternaria sp.* in herbs and spices, such as rosemary, parsley, sage, marjoram, thyme, mint, rue, angelica, bay, oregano, dill, basil, borage, horseradish, tarragon, chervil, mint, lavender, lemon verbena, rose hip, bergamot, hibiscus sabdariffa, marjoram, jasmine, chamomile, stevia, fennel, mustard, black pepper, mace, cinnamon, cassia, cloves, saffron, turmeric, ginger and galingale.

In a further embodiment the present invention relates to the use of fluopyram for controlling *Sphaerotheca macularis, Sphaerotheca humuli* and *Botrytis cinerea* in hops.

In a further embodiment the present invention relates to the use of fluopyram for controlling *Erysiphe suffulta* in kaki.

In a further embodiment the present invention relates to the use of fluopyram for controlling *Alternaria porri* in leek.

In a further embodiment the present invention relates to the use of fluopyram for controlling *Botrytis cinerea, Sclerotinia sclerotiorum* and *Sclerotinia minor* in lettuce and leafy vegetables.

In a further embodiment the present invention relates to the use of fluopyram for controlling *Oidium mangifera* in mango.

In a further embodiment the present invention relates to the use of fluopyram for controlling *Sclerotinia sclerotiorum, Erysiphe cruciferarum, Alternaria brassicae, Leptosphaeria maculans* in oil seed rape and canola.

In a further embodiment the present invention relates to the use of fluopyram for controlling *Sphaerotheca fuliginea* in papaya.

In a further embodiment the present invention relates to the use of fluopyram for controlling *Botrytis cinerea, Sclerotinia sclerotiorum, Erysiphe pisi and Ascochyta pisi* in pea.

In a further embodiment the present invention relates to the use of fluopyram for controlling *Botrytis cinerea, Sclerotinia sclerotiorum, Erysiphe pisi and Ascochyta pisi* in chickpea.

In a further embodiment the present invention relates to the use of fluopyram for controlling *Botrytis cinerea, Sclerotinia sclerotiorum, Erysiphe pisi and Ascochyta pisi* in lentil.

In a further embodiment the present invention relates to the use of fluopyram for controlling *Cercospora arachidicola* in peanut.

In a further embodiment the present invention relates to the use of fluopyram for controlling *Botrytis cinerea, Sclerotinia sclerotiorum and Leveillula taurica* in pepper.

In a further embodiment the present invention relates to the use of fluopyram for controlling *Alternaria sp., Erysiphe sp., Cercospora sp* an, *Sclerotinia sclerotiorum* in roots & tubers.

In a further embodiment the present invention relates to the use of fluopyram for controlling *Botrytis cinerea* and *Sphaerotheca pannosa* in roses.

In a further embodiment the present invention relates to the use of fluopyram for controlling *Botrytis cinerea* and *Sphaerotheca pannosa* in flowers.

In a further embodiment the present invention relates to the use of fluopyram for controlling Monilinia sp., Sphaerotheca pannosa, Blumeriella jappii, *Wilsonomyces carpophilus, Rhizopus sp.* and *Cladosporium sp.* in stone fruits, such as cherries.

In a further embodiment the present invention relates to the use of fluopyram for controlling Monilinia sp., Sphaerotheca pannosa, Blumeriella jappii, *Wilsonomyces carpophilus, Rhizopus sp.* and *Cladosporium sp.* in stone fruits, such as plums.

In a further embodiment the present invention relates to the use of fluopyram for controlling Monilinia sp., Sphaerotheca pannosa, Blumeriella jappii, *Wilsonomyces carpophilus, Rhizopus sp.* and *Cladosporium sp.* in stone fruits, such as apricots.

In a further embodiment the present invention relates to the use of fluopyram for controlling Monilinia sp., Sphaerotheca pannosa, Blumeriella jappii, *Wilsonomyces carpophilus, Rhizopus sp* and *Cladosporium sp.* in stone fruits, such as nectarines.

In a further embodiment the present invention relates to the use of fluopyram for controlling *Monilinia sp., Sphaerotheca pannosa, Blumeriella jappii, Wilsonomyces carpophilus, Rhizopus sp.* and *Cladosporium sp.* in stone fruits, such as peaches.

In a further embodiment the present invention relates to the use of fluopyram for controlling *Botrytis cinerea, Sphaerotheca macularis, Rhizopus sp.* and *Penicillium sp.* in strawberry.

In a further embodiment the present invention relates to the use of fluopyram for controlling *Botrytis cinerea, Sclerotinia sclerotiorum* and *Alternaria sp.* in sunflower.

In a further embodiment the present invention relates to the use of fluopyram for controlling *Botrytis cinerea, Leveillula taurica, Alternaria solani* and *Septoria lycopersici* in tomato.

In a further embodiment the present invention relates to the use of fluopyram for controlling *Botrytis cinerea, Leveillula taurica, Alternaria solani* and *Septoria lycopersici* in egg plant.

In a further embodiment the present invention relates to the use of fluopyram for controlling *Sclerotinia homoeocarpa* and *Erysiphe sp.* in turf and grasses.

In a further embodiment the present invention relates to the use of fluopyram for controlling *Diplodia pinea, Lophodermium pinastri* in evergreen coniferous trees (Christmas trees), such as Silver Fir *Abies alba,* Nordmann Fir *Abies nordmanniana,* Noble Fir *Abies procera,* Norway Spruce *Picea abies,* Serbian Spruce *Picea omorika,* Scots Pine *Pinus sylvestris,* Stone Pine *Pinus pinea* , Swiss Pine *Pinus cembra,* Douglas-fir *Pseudotsuga menziesii,* Balsam Fir *Abies balsamea,* Fraser Fir *Abies fraseri,* Grand Fir *Abies grandis,* Guatemalan Fir *Abies guatemalensis,* Noble Fir *Abies procera,* Red Fir *Abies magnifica,* Colorado Pine *Pinus edulis,* Jeffrey Pine *Pinus jeffreyi,* Scots Pine *Pinus sylvestris,* Stone Pine *Pinus pinea* and Norfolk Island pine *Araucaria heterophylla.*

In a further embodiment the present invention relates to the use of fluopyram for controlling *Monilinia sp., Sphaerotheca pannosa, Podosphaera tridactyla, Botrytis cinerea, Alternaria alternate, Wilsonomyces carpophilus, Cladosporium sp* .and *Botryosphaeria dothidea Rhizopus sp* in tree nuts.

### Specific uses of compound combinations comprising fluopyram (FLU) and further active ingredients

In an alternative embodiment of the present invention fluopyram as such or formulations thereof can be applied in combination with further known fungicides, bactericides, acaricides, nematicides, herbicides, insecticides.

Moreover, fluopyram can be combined with safeners, products for improving soil quality, fertilizers or crop stress reducing compounds, for instance *Myconate,* for broadening the activity spectrum and in order to prevent the development of resistance. In many instances, synergistic effects are obtained, i.e. the activity of the mixture exceeds the activity of the individual components.

According to the invention the expression *"composition"* stands for the various combinations of compounds A) and B), for example in a single "ready-mix" form, in a combined spray mixture composed from separate formulations of the single active compounds, such as a "tank-mix", and in a combined use of the single active ingredients when applied in a sequential manner, i.e. one after the other with a reasonably short period, such as a few hours or days. Preferably the order of applying the compounds A) and B) is not essential for working the present invention.

### Specific uses of binary compositions comprising fluopyram (FLU) and trifloxystrobin (TFS)

One embodiment of the present invention relates to the use of compositions comprising fluopyram and trifloxystrobin.

Trifloxystrobin and its manufacturing process starting from known and commercially available compounds is described in EP-A 0 460 575.

The compositions according to the present invention comprise FLU and the TFS in a ratio of 50 : 1 to1 : 50 (FLU)/(TFS), preferably in a ratio of 10 : 1 to1 : 10 (FLU)/(TFS), most preferably in a ratio of 5 : 1 to1 : 5 (FLU)/(TFS).(Final ratio is 1:1)

According to the invention the following uses of compositions comprising FLU and TFS in combination with specific pathogens and crops are preferred:

Use of a composition comprising fluopyram and trifloxystrobin for controlling *Podosphaera leuchotricha, Alternaria sp, Venturia sp.,Stemphylium vesicarium,Gloeosporium fructigenum, Botrytis cinerea, Penicillium sp , Gloeodes pomigena, Glomerella cingulata, Botryophaeria dothidea , Gymnosporangium sp.* and *Schizothyrium pomi* in pome fruits.

Use of a composition comprising fluopyram and trifloxystrobin for controlling *Podosphaera leuchotricha, Alternaria sp,Venturia sp.,Stemphylium vesicarium,Gloeosporium fructigenum, Botrytis cinerea, Penicillium sp , Gloeodes pomigena, Glomerella cingulata, Botryophaeria dothidea , Gymnosporangium sp.* and *Schizothyrium pomi* in apples.

Use of a composition comprising fluopyram and trifloxystrobin for controlling *Podosphaera leuchotricha, Alternaria sp,Venturia sp.,Stemphylium vesicarium,Gloeosporium fructigenum, Botrytis cinerea, Penicillium sp , Gloeodes pomigena, Glomerella cingulata, Botryophaeria dothidea , Gymnosporangium sp.* and *Schizothyrium pomi* in pears.

Use of a composition comprising fluopyram and trifloxystrobin for controlling *Leveillula taurica*

*Erysiphe cichoracearum, Botrytis cinerea* and *Ramularia sp.* in artichoke.

Use of a composition comprising fluopyram and trifloxystrobin for controlling *Stemphylium sp.* and *Puccinia sp.* in asparagus.

Use of a composition comprising fluopyram and trifloxystrobin for controlling *Glomerella cingulata* in avocado.

Use of a composition comprising fluopyram and trifloxystrobin for controlling *Mycosphaerella fijiensis* in banana.

Use of a composition comprising fluopyram and trifloxystrobin for controlling *Botrytis cinerea, Sphaerotheca sp., Alternaria sp., Mycosphaerella sp* and *Septoria sp.* in berry, such as craneberry and bushberry.

Use of a composition comprising fluopyram and trifloxystrobin for controlling *Botrytis cinerea, Sphaerotheca sp., Alternaria sp., Mycosphaerella sp* and *Septoria sp.* in berry, such as bushberry.

Use of a composition comprising fluopyram and trifloxystrobin for controlling *Alternaria brassicae, Erysiphe polygoni, Erysiphe cruciferarum, Cercospora brassicicola, Sclerotinia sclerotiorum, Mycosphaerella brassicae* and *Botrytis cinerea* in brassica vegetables.

Use of a composition comprising fluopyram and trifloxystrobin for controlling *Helminthosporium sp., Erysiphe graminis, Oculimacula sp., Septoria sp., Leptosphaeria nodorum, Puccinia sp.* in Cereals, e.g. wheat.

Use of a composition comprising fluopyram and trifloxystrobin for controlling *Helminthosporium sp., Erysiphe graminis, Oculimacula sp., Septoria sp., Leptosphaeria nodorum, Puccinia sp.* in Cereals, e.g. rye.

Use of a composition comprising fluopyram and trifloxystrobin for controlling *Helminthosporium sp., Erysiphe graminis, Oculimacula sp., Rhyncosporium secalis Puccinia sp.* in Cereals, e.g. summer or winter barley.

Use of a composition comprising fluopyram and trifloxystrobin for controlling *Helminthosporium sp., Erysiphe graminis, Oculimacula sp., Septoria avenae, Puccinia sp.* in Cereals, e.g. oat.

Use of a composition comprising fluopyram and trifloxystrobin for controlling *Erysiphe graminis,* and *Puccinia sp.* in cereals, e.g. triticale.

Use of a composition comprising fluopyram and trifloxystrobin for controlling *Erysiphe cichoracearum, Sclerotinia sclerotiorum, Phoma exigua and Alternaria dauci* in chicory.

Use of a composition comprising fluopyram and trifloxystrobin for controlling *Erysiphe cichoracearum, Sclerotinia sclerotiorum, Phoma exigua and Alternaria dauci* in witloof.

Use of a composition comprising fluopyram and trifloxystrobin for controlling *Elsinoe fawcettii, Alternaria alternate, Mycosphaerella citri, Diaporthe citri* and *Colletotrichum acutatum* in citrus.

Use of a composition comprising fluopyram and trifloxystrobin for controlling *Ramularia sp.* and *Glomerella sp.* in cotton.

Use of a composition comprising fluopyram and trifloxystrobin for controlling *Botrytis cinerea, Sclerotinia sclerotiorum, Sphaerotheca fuliginea, Erysiphe cichoracearum, Alternaria cucumerina, Colletotrichum sp.* and *Rhizoctonia sp.* in cucurbits.

Use of a composition comprising fluopyram and trifloxystrobin for controlling *Botrytis cinerea, Erysiphe necator, Aspergillus sp., Penicillium sp., Phomopsis viticola* and *Guignardia bidewellii* in grapes.

Use of a composition comprising fluopyram and trifloxystrobin for controlling *Erysiphe sp., Botrytis cinerea, Alternaria panax* in ginseng.

Use of a composition comprising fluopyram and trifloxystrobin for controlling *Sphaerotheca macularis, Sphaerotheca humuli, Botrytis cinerea* in hops.

Use of a composition comprising fluopyram and trifloxystrobin for controlling *Erysiphe suffulta* in kaki.

Use of a composition comprising fluopyram and trifloxystrobin for controlling *Botrytis cinerea, Sclerotinia sclerotiorum, Sclerotinia minor, Alternaria sp., Colletotrichum sp., Erysiphe cichoracearum, Cercospora apii, Septoria apiicola, Puccinia sp.* and *Uromyces sp.* in lettuce.

Use of a composition comprising fluopyram and trifloxystrobin for controlling *Botrytis cinerea, Sclerotinia sclerotiorum, Sclerotinia minor, Alternaria sp., Colletotrichum sp., Erysiphe cichoracearum, Cercospora apii, Septoria apiicola, Puccinia sp.* and *Uromyces sp.* in leafy vegetables e.g. spinach.

Use of a composition comprising fluopyram and trifloxystrobin for controlling *Botrytis cinerea, Sclerotinia sclerotiorum, Sclerotinia minor, Alternaria sp., Colletotrichum sp., Erysiphe cichoracearum, Cercospora apii, Septoria apiicola, Puccinia sp.* and *Uromyces sp.* in leafy vegetables e.g. celery.

Use of a composition comprising fluopyram and trifloxystrobin for controlling *Oidium mangifera* and *Colletotrichum sp.* in mango.

Use of a composition comprising fluopyram and trifloxystrobin for controlling *Sclerotinia sclerotiorum, Erysiphe cruciferarum, Alternaria brassicae, Leptosphaeria maculans,Botrytis cinerea, Pyrenopeziza brassicae* and *Pseudocercosporella capsellae* in oil seed rape.

Use of a composition comprising fluopyram and trifloxystrobin for controlling *Sclerotinia sclerotiorum, Erysiphe cruciferarum, Alternaria brassicae, Leptosphaeria maculans,Botrytis cinerea, Pyrenopeziza brassicae* and *Pseudocercosporella capsellae* in canola.

Use of a composition comprising fluopyram and trifloxystrobin for controlling *Sphaerotheca fuliginea* in papaya.

Use of a composition comprising fluopyram and trifloxystrobin for controlling *Cercospora arachidicola, Cercosporidium personatum, Puccinia arachidis, Phoma arachidicola, Leptosphaerulina crassiasca, Sclerotinia sp.* and *Rhizoctonia sp.* in peanut.

Use of a composition comprising fluopyram and trifloxystrobin for controlling *Alternaria sp., Erysiphe sp., Cercospora sp., Uromyces sp., Puccinia sp., Sclerotinia sclerotiorum, Botrytis cinerea, Septoria sp., Helminthosporium solani, Colletotrichum coccodes* and *Rhizoctonia sp.* in roots & tubers.

Use of a composition comprising fluopyram and trifloxystrobin for controlling *Botrytis cinerea* and *Sphaerotheca pannosa* in roses.

Use of a composition comprising fluopyram and trifloxystrobin for controlling *Botrytis cinerea* and *Sphaerotheca pannosa* in flowers.

Use of a composition comprising fluopyram and trifloxystrobin for controlling *Microsphaera diffusa, Uromyces appendiculatus* and *Diaporthe phaseolorum* in soybean.

Use of a composition comprising fluopyram and trifloxystrobin for controlling *Botrytis cinerea, Sclerotinia sclerotiorum, Erysiphe cichoracearum* and *Alternaria sp* in sunflower.

Use of a composition comprising fluopyram and trifloxystrobin for controlling *Monilinia sp., Sphaerotheca pannosa, Blumeriella jappii, Wilsonomyces carpophilus, Cladosporium sp., Botrytis cinerea, Rhizopus sp.* and *Taphrina sp.* in stone fruits.

Use of a composition comprising fluopyram and trifloxystrobin for controlling *Botrytis cinerea, Sphaerotheca macularis, Rhizopus sp., Penicillium sp., Colletotrichum sp., Phomopsis obscurans* and *Mycosphaerella fragariae* in strawberry.

Use of a composition comprising fluopyram and trifloxystrobin for controlling *Botrytis cinerea, Leveillula taurica, Alternaria solani, Alternaria alternata, Septoria lycopersici, Stemphylium sp. Corynespora cassicola* and *Colletotrichum sp.* in fruiting vegetables e.g. tomato.

Use of a composition comprising fluopyram and trifloxystrobin for controlling Botrytis cinerea, *Leveillula taurica, Alternaria solani, Alternaria alternata, Septoria lycopersici, Stemphylium sp., Corynespora cassicola* and *Colletotrichum sp.* in fruiting vegetables e.g. egg plant.

Use of a composition comprising fluopyram and trifloxystrobin for controlling *Botrytis cinerea, Leveillula taurica, Alternaria solani, Alternaria alternata, Septoria lycopersici, Stemphyllium sp., Corynespora cassicola* and *Colletotrichum sp.* in fruiting vegetables: e.g. pepper.

Use of a composition comprising fluopyram and trifloxystrobin for controlling *Sclerotinia homoeocarpa, Erysiphe graminis* and *Puccinia sp.* in turf and grasses.

Use of a composition comprising fluopyram and trifloxystrobin for controlling Botryophaeria dothidea, Alternaria alternate, Colletotrichum acutatum, Glomerella cingulata, *Cladosporium carpophilum, Cladosporium carygenum, Wilsonomyces carpophilus, Rhizopus sp.* and *Anisogramma anomala* in tree nuts (other than almond, pecan and pistachio): e.g. macadamia, chestnut.

Use of a composition comprising fluopyram and trifloxystrobin for controlling *Monilinia sp., Sphaerotheca pannosa, Podosphaera tridactyla, Alternaria alternata, Wilsonomyces carpophilus, Cladosporium sp., Colletotrichum acutatum, Rhizopus sp.* and *Transchelia discolor* in Tree nuts, such as almond.

Use of a composition comprising fluopyram and trifloxystrobin for controlling *Cladosporium caryigenum, Glomerella cingulata, Rhizopus sp.* and *Mycrosphaera sp.* in tree nuts, such as pecan.

Use of a composition comprising fluopyram and trifloxystrobin for controlling *Botrytis cinerea, Alternaria alternate, Botryophaeria dothidea,* Rhizopus sp and *Septoria pistaciarum* in tree nuts, such as pistachio.

### Specific uses of binary compositions comprising fluopyram (FLU) and tebuconazole (TBZ)

One embodiment of the present invention relates to the use of compositions comprising fluopyram and tebuconazol.

Tebuconazole and its manufacturing process starting from known and commercially available compounds is described in EP-A 0 040 345.

The compositions according to the present invention comprise FLU and the TBZ in a ratio of 50 : 1 to1 : 50 (FLU)/(TBZ), preferably in a ratio of 10 : 1 to1 : 10 (FLU)/(TBZ), most preferably in a ratio of 2 : 1 to1 : 2 (FLU)/(TBZ).

According to the invention the following uses of compositions comprising FLU and TBZ in combination with specific pathogens and crops are preferred:

Use of a composition comprising fluopyram and tebuconazole for controlling *Podosphaera leucotricha, Alternaria sp., Venturia sp., Stemphylium vesicarium, Gloeosporium fructigenum, Botrytis cinerea, Penicillium sp., Gloeodes pomigena, Glomerella cingulata, Botryophaeria dothidea, Gymnosporangium sp.* and *Schizothyrium pomi* in pome fruits.

Use of a composition comprising fluopyram and tebuconazole for controlling *Podosphaera leucotricha, Alternaria sp., Venturia sp., Stemphylium vesicarium, Gloeosporium fructigenum, Botrytis cinerea, Penicillium sp., Gloeodes pomigena, Glomerella cingulata, Botryophaeria dothidea, Gymnosporangium sp.* and *Schizothyrium pomi* in apples.

Use of a composition comprising fluopyram and tebuconazole for controlling *Podosphaera leucotricha, Alternaria sp., Venturia sp., Stemphylium vesicarium, Gloeosporium fructigenum, Botrytis cinerea, Penicillium sp., Gloeodes pomigena, Glomerella cingulata, Botryophaeria dothidea, Gymnosporangium sp.* and *Schizothyrium pomi* in pears.

Use of a composition comprising fluopyram and tebuconazole for controlling *Stemphylium sp.* and *Puccinia sp.* in asparagus.

Use of a composition comprising fluopyram and tebuconazole for controlling *Glomerella cingulata* in avocado.

Use of a composition comprising fluopyram and tebuconazole for controlling *Mycosphaerella fijiensis* in banana.

Use of a composition comprising fluopyram and tebuconazole for controlling *Alternaria brassicae, Erysiphe polygoni, Erysiphe cruciferarum, Cercospora brassicicola, Sclerotinia sclerotiorum, Mycosphaerella brassicae* and *Botrytis cinerea* in brassica, e.g. broccoli.

Use of a composition comprising fluopyram and tebuconazole for controlling *Alternaria brassicae, Erysiphe polygoni, Erysiphe cruciferarum, Cercospora brassicicola, Sclerotinia sclerotiorum, Mycosphaerella brassicae* and *Botrytis cinerea* in brassica, e.g. cauliflower.

Use of a composition comprising fluopyram and tebuconazole for controlling *Alternaria brassicae, Erysiphe polygoni, Erysiphe cruciferarum, Cercospora brassicicola, Sclerotinia sclerotiorum, Mycosphaerella brassicae* and *Botrytis cinerea* in brassica, e.g. head cabbage.

Use of a composition comprising fluopyram and tebuconazole for controlling *Alternaria brassicae, Erysiphe polygoni, Erysiphe cruciferarum, Cercospora brassicicola, Sclerotinia sclerotiorum, Mycosphaerella brassicae* and *Botrytis cinerea* in brassica, e.g. brussel sprout.

Use of a composition comprising fluopyram and tebuconazole for controlling *Alternaria porri, Puccinia allii, Puccinia porri, Stemphylium vasicarium* in bulbs, e.g. onion.

Use of a composition comprising fluopyram and tebuconazole for controlling *Alternaria porri, Puccinia allii, Puccinia porri, Stemphylium vasicarium* in bulbs, e.g. shallot.

Use of a composition comprising fluopyram and tebuconazole for controlling *Alternaria porri, Puccinia allii, Puccinia porri, Stemphylium vasicarium* in bulbs, e.g. spring onion.

Use of a composition comprising fluopyram and tebuconazole for controlling *Alternaria dauci, Erysiphe heraclei., Sclerotinia sclerotiorum, Cercospora carotae* and *Septoria petroselini* in carrots.

Use of a composition comprising fluopyram and tebuconazole for controlling *Helminthosporium sp. Erysiphe graminis, Oculimacula sp., Septoria sp., Leptosphaeria nodorum,* Fusarium sp and *Puccinia sp.* in cereals, such as wheat.

Use of a composition comprising fluopyram and tebuconazole for controlling *Helminthosporium sp. Erysiphe graminis, Oculimacula sp., Septoria sp., Leptosphaeria nodorum* and *Puccinia sp.* in cereals, such as rye.

Use of a composition comprising fluopyram and tebuconazole for controlling *Helminthosporium sp. Erysiphe graminis, Oculimacula sp., Rhyncosporium secalis and Puccinia sp.* in cereals, such as summer or winter barley.

Use of a composition comprising fluopyram and tebuconazole for controlling *Helminthosporium sp. Erysiphe graminis, Oculimacula sp., Septoria avenae* and *Puccinia sp.* in cereals, such as oat.

Use of a composition comprising fluopyram and tebuconazole for controlling *Erysiphe graminis* and *Puccinia sp.* in cereals, such as triticale.

Use of a composition comprising fluopyram and tebuconazole for controlling *Erysiphe cichoracearum, Phoma exigua, Alternaria dauci* and *Puccinia cichorii* in chicory.

Use of a composition comprising fluopyram and tebuconazole for controlling *Erysiphe cichoracearum, Phoma exigua, Alternaria dauci* and *Puccinia cichorii* in witloof.

Use of a composition comprising fluopyram and tebuconazole for controlling *Ramularia sp.* and *Glomerella sp.* in cotton.

Use of a composition comprising fluopyram and tebuconazole for controlling *Sphaerotheca fuliginea, Erysiphe cichoracearum,Alternaria cucumerina* and *Colletotrichum sp.* in cucurbits.

Use of a composition comprising fluopyram and tebuconazole for controlling *Erysiphe necator, Guignardia bidewellii, Phomopsis viticola, Pseudopeziza tracheiphila* and *Botrytis cinerea* in grape.

Use of a composition comprising fluopyram and tebuconazole for controlling *Sphaerotheca macularis, Sphaerotheca humuli* and *Botrytis cinerea* in hops.

Use of a composition comprising fluopyram and tebuconazole for controlling *Erysiphe suffulta* in kaki.

Use of a composition comprising fluopyram and tebuconazole for controlling *Alternaria porri* and *Puccinia sp.* in leek.

Use of a composition comprising fluopyram and tebuconazole for controlling *Oidium mangifera* and *Colletotrichum sp.* in mango.

Use of a composition comprising fluopyram and tebuconazole for controlling *Cercospora sp* in okra.

Use of a composition comprising fluopyram and tebuconazole for controlling *Sphaerotheca fuliginea* in papaya.

Use of a composition comprising fluopyram and tebuconazole for controlling *Cercospora arachidicola, Cercosporidium personatum, Puccinia arachidis, Phoma arachidicola, Leptosphaerulina crassiasca, Sclerotinia sp., Rhizoctonia sp.* and *Sclerotium rolfsii* in peanut.

Use of a composition comprising fluopyram and tebuconazole for controlling *Microsphaera diffusa, Uromyces appendiculatus* and *Diaporthe phaseolorum* in soybean.

Use of a composition comprising fluopyram and tebuconazole for controlling *Monilinia sp., Sphaerotheca pannosa, Blumeriella jappii, Wilsonomyces carpophilus, Cladosporium sp., Botrytis cinerea, Taphrina sp.* and *Tranzschelia discolor* in stone fruits.

Use of a composition comprising fluopyram and tebuconazole for controlling *Botrytis cinerea, Sclerotinia sclerotiorum, Erysiphe cichoracearum* and *Puccinia helianthi* in sunflower.

Use of a composition comprising fluopyram and tebuconazole for controlling *Botryophaeria dothidea, Alternaria alternata, Colletotrichum acutatum, Glomerella cingulata Cladosporium carpophilum, Cladosporium carygenum, Wilsonomyces carpophilus* and *Anisogramma anomala* in tree nuts (other than Almond, Pecan & Pistachio): e.g. macadamia.

Use of a composition comprising fluopyram and tebuconazole for controlling *Botryophaeria dothidea, Alternaria alternata, Colletotrichum acutatum, Glomerella cingulata Cladosporium carpophilum, Cladosporium carygenum, Wilsonomyces carpophilus, Rhizopus sp.* and *Anisogramma anomala* in tree nuts (other than Almond, Pecan & Pistachio): e.g. chestnut.

Use of a composition comprising fluopyram and tebuconazole for controlling *Monilinia sp., Sphaerotheca pannosa, Podosphaera tridactyla, Alternaria alternata, Wilsonomyces carpophilus, Cladosporium sp., Colletotrichum acutatum, Rhizopus sp.* and *Transchelia discolor* in tree nuts, such as almond.

Use of a composition comprising fluopyram and tebuconazole for controlling *Cladosporium caryigenum, Glomerella cingulata, Mycrosphaera sp., Gnomonia sp., Rhizopus sp* and *Sirosporum diffusium* in tree nuts, such as pecan.

Use of a composition comprising fluopyram and tebuconazole for controlling *Botrytis cinerea, Alternaria alternata, Botryophaeria dothidea, Rhizopus sp.* and *Septoria pistaciarum* in tree nuts, such as pistachio.

### Specific uses of binary compositions comprising fluopyram (FLU) and pyrimethanil (PYM))

One embodiment of the present invention relates to the use of compositions comprising fluopyram and pyrimethanil.

Pyrimethanil and its manufacturing process starting from known and commercially available compounds is described in DD 151 404.

The compositions according to the present invention comprise FLU and the PYM in a ratio of 50 : 1 to 1 : 50 (FLU)/(PYM), preferably in a ratio of 10 : 1 to1 : 10 (FLU)/(PYM), most preferably in a ratio of 3 : 1 to1 : 3 (FLU)/(PYM).

According to the invention the following uses of compositions comprising FLU and PYM in combination with specific pathogens and crops are preferred:

Use of a composition comprising fluopyram and pyrimethanil for controlling *Mycosphaerella fijiensis* in banana.

Use of a composition comprising fluopyram and pyrimethanil for controlling *Podosphaera leucotricha, Alternaria sp., Venturia sp., Stemphylium vesicarium, Gloeosporium fructigenum, Botrytis cinerea* and *Penicillium sp.* in apples.

Use of a composition comprising fluopyram and pyrimethanil for controlling *Podosphaera leucotricha, Alternaria sp., Venturia sp., Stemphylium vesicarium, Gloeosporium fructigenum, Botrytis cinerea* and *Penicillium sp.* in pears.

Use of a composition comprising fluopyram and pyrimethanil for controlling *Podosphaera leucotricha, Alternaria sp., Venturia sp., Stemphylium vesicarium, Gloeosporium fructigenum, Botrytis cinerea* and *Penicillium sp.* in pome fruits.

Use of a composition comprising fluopyram and pyrimethanil for controlling *Botrytis cinerea, Sclerotinia sclerotiorum, Stemphylium vesicarium, Cladosporium allii, Sclerotium cepivorum* and *Alternaria porrii* in bulbs, such as onions, garlic, shallot, spring onion.

Use of a composition comprising fluopyram and pyrimethanil for controlling *Botrytis cinerea, Sphaerotheca sp., Alternaria sp., Mycosphaerella sp., Septoria sp.* and *Monilinia sp.* in berry, such as cranberry.

Use of a composition comprising fluopyram and pyrimethanil for controlling *Botrytis cinerea, Sphaerotheca sp., Alternaria sp., Mycosphaerella sp., Septoria sp.* and *Monilinia sp.* in berry, such as bushberry.

Use of a composition comprising fluopyram and pyrimethanil for controlling *Botrytis cinerea, Erysiphe necator, Aspergillus sp. and Penicillium sp.* in grape (table, wine).

Use of a composition comprising fluopyram and pyrimethanil for controlling *Alternaria sp., Erysiphe sp., Sclerotinia sclerotiorum, Helminthosporium solani, Ascochyta sp., Botrytis cinerea,* and *Colletotrichum sp.* in roots and tubers.

Use of a composition comprising fluopyram and pyrimethanil for controlling *Botrytis cinerea, Leveillula taurica, Alternaria solani, Alternaria alternata, Septoria lycopersici, Stemphylium sp.,* and *Corynespora cassiicola* in tomato.

Use of a composition comprising fluopyram and pyrimethanil for controlling *Botrytis cinerea, Leveillula taurica, Alternaria solani, Alternaria alternata, Septoria lycopersici, Stemphylium sp.,* and *Corynespora cassiicola* in egg plant.

Use of a composition comprising fluopyram and pyrimethanil for controlling *Monilinia sp, Sphaerotheca pannosa, Blumeriella jappii, Cladosporium sp., Wilsonomyces carpophyllus,* Rhizopus sp. and *Botrytis cinerea* in stone fruits.

Use of a composition comprising fluopyram and pyrimethanil for controlling *Monilinia sp., Sphaerotheca pannosa, Alternaria alternata, Rhizopus sp.* and *Wilsonomyces carpophilus* in tree nuts, such as almond.

Use of a composition comprising fluopyram and pyrimethanil for controlling *Botrytis cinerea, Alternaria alternata, Botryophaeria dothidea, Rhizopus sp.* and *Septoria pistaciarum* in tree nuts, such as pistachio.

Use of a composition comprising fluopyram and pyrimethanil for controlling *Botrytis cinerea, Sphaerotheca macularis, Rhizopus sp., Penicillium sp., Phomopsis obscurans* and *Mycosphaerella fragariae* in strawberry.

### Binary compositions comprising fluopyram (FLU) and prothioconazole (PTZ)

One embodiment of the present invention relates to the use of compositions comprising fluopyram and prothioconazole.

Prothioconazole and its manufacturing process starting from known and commercially available compounds is described in WO 96/16048.

The compositions according to the present invention comprise FLU and the PTZ in a ratio of 50 : 1 to1 : 50 (FLU)/(PTZ), preferably in a ratio of 10 : 1 to1 : 10 (FLU)/(PTZ), most preferably in a ratio of 2 : 1 to1 : 1 (FLU)/(PTZ).

According to the invention the following uses of compositions comprising FLU and PTZ in combination with specific pathogens and crops are preferred:

Use of a composition comprising fluopyram and prothioconazol for controlling *Sclerotinia sclerotiorum, Erysiphe cruciferarum, Alternaria brassicae, Leptosphaeria maculans, Botrytis cinerea, Pyrenopeziza brassicae* and *Pseudocercosporella capsellae* in oil seed rape.

Use of a composition comprising fluopyram and prothioconazol for controlling *Sclerotinia sclerotiorum, Erysiphe cruciferarum, Alternaria brassicae, Leptosphaeria maculans, Botrytis cinerea, Pyrenopeziza brassicae* and *Pseudocercosporella capsellae* in canola.

Use of a composition comprising fluopyram and prothioconazol for controlling *Botrytis cinerea, Sclerotinia sclerotiorum, Phoma exigua* and *Erysiphe polygoni* in beans.

Use of a composition comprising fluopyram and prothioconazol for controlling *Botrytis cinerea, Sclerotinia sclerotiorum, Erysiphe pisis* and *Ascochyta pisi in* pea.

Use of a composition comprising fluopyram and prothioconazol for controlling *Botrytis cinerea, Sclerotinia sclerotiorum, Erysiphe pisis* and *Ascochyta pisi in* chickpea.

Use of a composition comprising fluopyram and prothioconazol for controlling *Botrytis cinerea, Sclerotinia sclerotiorum, Erysiphe pisis* and *Ascochyta pisi in* lentil.

Use of a composition comprising fluopyram and prothioconazol for controlling *Cercospora arachidicola* and *Sclerotium rolfsii* in peanut.

### Binary composition comprising fluopyram (FLU) and triadimenol (TDL)

One embodiment of the present invention relates to the use of compositions comprising fluopyram and triadimenol.

Triadimenol and its manufacturing process starting from known and commercially available compounds is described in DE-A 23 24 010.

The compositions according to the present invention comprise FLU and the TDL in a ratio of 50 : 1 to1 : 50 (FLU)/(TDL), preferably in a ratio of 10 : 1 to1 : 10 (FLU)/(TDL), most preferably in a ratio of 2 : 1 to1 : 1 (FLU)/(TDL).

According to the invention the following uses of compositions comprising FLU and TDL in combination with specific pathogens and crops are preferred:

Use of a composition comprising fluopyram and triadimenol for controlling *Leveillula taurica, Erysiphe cichoracearum* in artichoke.

Use of a composition comprising fluopyram and triadimenol for controlling *Leveillula taurica* in aubergine.

Use of a composition comprising fluopyram and triadimenol for controlling *Mycosphaerella fijiensis* in banana.

Use of a composition comprising fluopyram and triadimenol for controlling *Botrytis cinerea, Sclerotinia sclerotiorum, Stemphylium vesicarium, Cladosporium allii* and *Sclerotium cepivorum* in bulbs, such as onions.

Use of a composition comprising fluopyram and triadimenol for controlling *Botrytis cinerea, Sclerotinia sclerotiorum, Stemphylium vesicarium, Cladosporium allii* and *Sclerotium cepivorum* in bulbs, such as garlic.

Use of a composition comprising fluopyram and triadimenol for controlling *Botrytis cinerea, Sclerotinia sclerotiorum, Stemphylium vesicarium, Cladosporium allii* and *Sclerotium cepivorum* in bulbs, such as shallot.

Use of a composition comprising fluopyram and triadimenol for controlling *Botrytis cinerea, Sclerotinia sclerotiorum, Stemphylium vesicarium, Cladosporium allii* and *Sclerotium cepivorum* in bulbs, such as spring onion (fresh).

Use of a composition comprising fluopyram and triadimenol for controlling *Sphaerotheca fuliginea* and *Erysiphe cichoracearum* in cucurbits: e.g. cucumbers.

Use of a composition comprising fluopyram and triadimenol for controlling *Sphaerotheca fuliginea* and *Erysiphe cichoracearum* in cucurbits: e.g. melon.

Use of a composition comprising fluopyram and triadimenol for controlling *Sphaerotheca fuliginea* and *Erysiphe cichoracearum* in cucurbits: e.g. watermelon.

Use of a composition comprising fluopyram and triadimenol for controlling *Sphaerotheca fuliginea* and *Erysiphe cichoracearum* in cucurbits: e.g. zucchini.

Use of a composition comprising fluopyram and triadimenol for controlling *Leveillula taurica* in pepper.

Use of a composition comprising fluopyram and triadimenol for controlling *Sphaerotheca fuliginea* in strawberry.

Use of a composition comprising fluopyram and triadimenol for controlling *Leveillula taurica* in tomato.

### Binary composition comprising fluopyram (FLU) and spiroxamine (SPX)

One embodiment of the present invention relates to the use of compositions comprising fluopyram and spiroxamine.

Spiroxamine and its manufacturing process starting from known and commercially available compounds is described in DE-A 37 35 555.

The compositions according to the present invention comprise FLU and the SPX in a ratio of 50 : 1 to1 : 50 (FLU)/(SPX), preferably in a ratio of 10 : 1 to1 : 10 (FLU)/(SPX), most preferably in a ratio of 5 : 1 to1 : 5 (FLU)/(SPX.

According to the invention the following uses of compositions comprising FLU and SPX in combination with specific pathogens and crops are preferred:

Use of a composition comprising fluopyram and spiroxamine for controlling *Erysiphe necator* and *Botrytis cinerea* in grape.

Use of a composition comprising fluopyram and spiroxamine for controlling *Mycosphaerella fijiensis* in banana.

### Binary composition comprising fluopyram (FLU) and fosetyl (FEA)

One embodiment of the present invention relates to the use of compositions comprising fluopyram and fosetyl, fosetyl-Al or phosphoric acid.

Fosetyl and fosetyl-Al and their manufacturing process starting from known and commercially available compounds are described in (known from DE-A 24 56 627).

The compositions according to the present invention comprise FLU and the FEA in a ratio of 50 : 1 to1 : 50 (FLU)/(FEA), preferably in a ratio of 10 : 1 to1 : 10 (FLU)/(FEA), most preferably in a ratio of 5 : 1 to1 : 5 (FLU)/(FEA).

According to the invention the use of a composition comprising fluopyram and fosetyl for controlling *Mycosphaerella fijiensis* in banana is preferred.

### Ternary compositions comprising fluopyram (FLU)

Use of a composition comprising fluopyram (FLU), fluoxastrobin (FXA) and tebuconazole (TBZ) in a weight ratio of 6.67 (FLU) : 50 (FXA) : 8.33 (TBZ) for *controlling Helminthosporium sp., Tilletia caries, Tilletia controversa, Ustilago sp., Microdochium nivale, Fusarium sp.* and *Erysiphe graminis* in wheat.

Fluoxastrobin and its manufacturing process starting from known and commercially available compounds is described in DE-A 196 02 095.

Use of a composition comprising fluopyram (FLU), fluoxastrobin (FXA) and tebuconazole (TBZ) in a weight ratio of 6.67 (FLU) : 50 (FXA) : 8.33 (TBZ) for *controlling Helminthosporium sp., Tilletia caries, Tilletia controversa, Ustilago sp., Microdochium nivale, Fusarium sp.* and *Erysiphe graminis* in barley.

Use of a composition comprising fluopyram (FLU), prothioconazole (PTZ) and tebuconazole (TBZ) in a weight ratio of 20 (FLU) : 100(PTZ) : 60 (TBZ) for controlling *Helminthosporium sp., Tilletia caries, Tilletia controversa, Ustilago sp., Microdochium nivale, Fusarium sp. and Erysiphe graminis* in wheat.

Use of a composition comprising fluopyram (FLU), prothioconazole (PTZ) and tebuconazole (TBZ) in a weight ratio of 20 (FLU) : 100(PTZ) : 60 (TBZ) for controlling *Helminthosporium sp., Tilletia caries, Tilletia controversa, Ustilago sp., Microdochium nivale, Fusarium sp.* and *Erysiphe graminis* in barley.

Use of a composition comprising fluopyram (FLU), triadimenol (TDL) and prothioconazol (PTZ) in a weight ratio of 5 (FLU) : 187.5 (TDL) : 25 prothioconazol (PTZ) for controlling *Helminthosprium sp., Ustilago sp., Microdochium nivale, Fusarium sp., Erysiphe graminis* and *Puccinia sp.* in spring and winter barley.

Use of a composition comprising fluopyram (FLU), triadimenol and fluoxastrobin in a weight ratio of 5 (FLU) : 150 (TDL) : 25 (FXA) for controlling *Helminthosprium sp., Tilletia caries, Tilletia controversa, Ustilago sp., Microdochium nivale, Fusarium sp., Erysiphe graminis* and *Puccinia sp.* in wheat.

Use of a composition comprising fluopyram (FLU), triadimenol and fluoxastrobin in a weight ratio of 5 (FLU) : 150 (TDL) : 25 (FXA) for controlling *Helminthosprium sp., Tilletia caries, Tilletia controversa, Ustilago sp., Microdochium nivale, Fusarium sp., Erysiphe graminis* and *Puccinia sp.* in barley.

### Quaternary compositions comprising fluopyram (FLU)

Use of a composition comprising fluopyram (FLU), fluoxastrobin (FXA), prothioconazole (PTZ) and tebuconazole (TBZ) in a weight ratio of 10 (FLU) : 75(FXA) : 50 (PTZ) +7.5 (TBZ) for controlling *Helminthosporium sp., Tilletia caries, Tilletia controversa, Ustilago sp., Microdochium nivale, Fusarium sp.* and *Erysiphe graminis* in wheat

Use of a composition comprising fluopyram (FLU), fluoxastrobin (FXA), prothioconazole (PTZ) and tebuconazole (TBZ) in a weight ratio of 10 (FLU) : 75(FXA) : 50 (PTZ) +7.5 (TBZ) for controlling *Helminthosporium sp., Tilletia caries, Tilletia controversa, Ustilago sp., Microdochium nivale, Fusarium sp.* and *Erysiphe graminis* in barley.

Use of a composition comprising fluopyram (FLU), fluoxastrobin (FXA), tebuconazole (TBZ) and clothianidine (CTD) in a weight ratio of 6.67 (FLU), 50 (FXA), 8.33 (TBZ)+333.3 (CTD) for controlling *Helminthosporium sp., Tilletia caries, Tilletia controversa, Ustilago sp., Microdochium nivale, Fusarium sp., Erysiphe graminis, Aphids, Barley Yellow dwarf virus, Wireworm* and *Leaf hoppers* in wheat.

Use of a composition comprising fluopyram (FLU), fluoxastrobin (FXA), tebuconazole (TBZ) and clothianidine (CTD) in a weight ratio of 6.67 (FLU), 50 (FXA), 8.33 (TBZ)+333.3 (CTD) for controlling *Helminthosporium sp., Tilletia caries, Tilletia controversa, Ustilago sp., Microdochium nivale, Fusarium sp., Erysiphe graminis, Aphids, Barley Yellow dwarf virus, Wireworm* and *Leaf hoppers* in barley

Use of a composition comprising fluopyram (FLU), clothianidine (CTD), tebuconazole (TBZ) and prothioconazole (PTZ) in a weight ratio of 6.6 (FLU) : 333.3 (CTD) : 20 (TBZ) : 33.3 (PTZ) for controlling *Helminthosprium sp., Ustilago sp., Microdochium nivale, Fusarium sp., Erysiphe graminis, Aphids, Barley Yellow dwarf virus, Wireworms, Leaf hoppers in* winter barley.

The fact that the active compound combinations are well tolerated by plants at the concentrations required for controlling plant diseases permits a treatment of entire plants (above-ground parts of plants and roots), of propagation stock and seed, and of the soil. The active compound combinations according to the invention can be used for foliar application or else as seed dressings.

Fluopyram is also suitable for increasing the yield of crops. In addition, it shows reduced toxicity and is well tolerated by plants.

### Pathogens

### Mycotoxins

Furthermore, the treatments according to the invention can be able to reduce the contents of mycotoxins in the harvested crops and therefore in foods and animal feed stuff made therefrom.

Especially but not exclusively the following mycotoxins can be specified:

Deoxynivalenole (DON), Nivalenole, 15-Ac-DON, 3-Ac-DON, T2- und HT2- Toxins, Fumonisines, Zearalenone Moniliformine, Fusarine, Diaceotoxyscirpenole (DAS), Beauvericine, Enniatine, Fusaroproliferine, Fusarenole, Ochratoxines, Patuline, Ergotalcaloides und Aflatoxines, which are caused for example by the following fungal diseases: *Fusarium spec., like Fusarium acuminatum, F. avenaceum, F. crookwellense, F. culmorum, F. graminearum (Gibberella zeae), F. equiseti, F. fujikoroi, F. musarum, F. oxysporum, F. proliferatum, F. poae, F. pseudograminearum, F. sambucinum, F. scirpi, F. semitectum, F. solani, F. sporotrichoides, F. langsethiae, F. subglutinans, F. tricinctum, F. verticillioides* and others but also by *Aspergillus spec., Penicillium spec., Claviceps purpurea, Stachybotrys spec.* and others.

### Crops

In conjunction with the present invention an advantageous effect has been observed after treating apples; pears; artichoke; asparagus; banana; beans; berries; e.g. craneberry, bushberry; brassica vegetables; bulbs, e.g. onions, garlic, shallot; cereals; chicory, witloof, citrus, cotton, cucurbits, grapes, ginseng, herbs, spices, hops, kaki, leek, lettuce, leafy vegetables, mango, oil seed rape, canola, papaya, pea , chickpea, lentil, peanut, pepper, roots, tubers, roses, flowers, stone fruits, strawberry, sunflower, tomato, egg plant, turf, grasses, Christmas trees, Tree nuts.

However, the application of fluopyram shall not be limited to the above mentioned Crops.

### Wild plants, cultivars and plant varieties

According to the invention all plants and plant parts can be treated. By plants is meant all plants and plant populations such as desirable and undesirable wild plants, cultivars and plant varieties (whether or not protectable by plant variety or plant breeder's rights). Cultivars and plant varieties can be plants obtained by conventional propagation and breeding methods which can be assisted or supplemented by one or more biotechnological methods such as by use of double haploids, protoplast fusion, random and directed mutagenesis, molecular or genetic markers or by bioengineering and genetic engineering methods. By plant parts is meant all above ground and below ground parts and organs of plants such as shoot, leaf, blossom and root, whereby for example leaves, needles, stems, branches, blossoms, fruiting bodies, fruits and seed as well as roots, corms and rhizomes are listed. Crops and vegetative and generative propagating material, for example cuttings, corms, rhizomes, runners and seeds also belong to plant parts.

### Transgenic plants

The uses/method of treatment according to the invention can be used in the treatment of genetically modified organisms (GMOs), e.g. plants or seeds. Genetically modified plants (or transgenic plants) are plants in which a heterologous gene has been stably integrated into the genome. The expression "heterologous gene" essentially means a gene which is provided or assembled outside the plant and when introduced in the nuclear, chloroplastic or mitochondrial genome gives the transformed plant new or improved agronomic or other properties by expressing a protein or polypeptide of interest or by downregulating or silencing other gene(s) which are present in the plant (using for example, antisense technology, co suppression technology or RNA interference - RNAi - technology). A heterologous gene that is located in the genome is also called a transgene. A transgene that is defined by its particular location in the plant genome is called a transformation or transgenic event.

Depending on the plant species or plant cultivars, their location and growth conditions (soils, climate, vegetation period, diet), the treatment according to the invention may also result in superadditive ("synergistic") effects. Thus, for example, reduced application rates and/or a widening of the activity spectrum and/or an increase in the activity of the active compounds and compositions which can be used according to the invention, better plant growth, increased tolerance to high or low temperatures, increased tolerance to drought or to water or soil salt content, increased flowering performance, easier harvesting, accelerated maturation, higher harvest yields, bigger fruits, larger plant height, greener leaf color, earlier flowering, higher quality and/or a higher nutritional value of the harvested products, higher sugar concentration within the fruits, better storage stability and/or processability of the harvested products are possible, which exceed the effects which were actually to be expected.

At certain application rates, the active compound combinations according to the invention may also have a strengthening effect in plants. Accordingly, they are also suitable for mobilizing the defense system of the plant against attack by unwanted phytopathogenic fungi and/ or microorganisms and/or viruses. This may, if appropriate, be one of the reasons of the enhanced activity of the combinations according to the invention, for example against fungi. Plant-strengthening (resistance-inducing) substances are to be understood as meaning, in the present context, those substances or combinations of substances which are capable of stimulating the defense system of plants in such a way that, when subsequently inoculated with unwanted phytopathogenic fungi and/ or microorganisms and/or viruses, the treated plants display a substantial degree of resistance to these unwanted phytopathogenic fungi and/ or microorganisms and/or viruses. In the present case, unwanted phytopathogenic fungi and/ or microorganisms and/or viruses are to be understood as meaning phytopathogenic fungi, bacteria and viruses. Thus, the substances according to the invention can be employed for protecting plants against attack by the abovementioned pathogens within a certain period of time after the treatment. The period of time within which protection is effected generally extends from 1 to 10 days, preferably 1 to 7 days, after the treatment of the plants with the active compounds.

Plants and plant cultivars which are preferably to be treated according to the invention include all plants which have genetic material which impart particularly advantageous, useful traits to these plants (whether obtained by breeding and/or biotechnological means).

Plants and plant cultivars which are also preferably to be treated according to the invention are resistant against one or more biotic stresses, i.e. said plants show a better defense against animal and microbial pests, such as against nematodes, insects, mites, phytopathogenic fungi, bacteria, viruses and/or viroids.

Plants and plant cultivars which may also be treated according to the invention are those plants which are resistant to one or more abiotic stresses. Abiotic stress conditions may include, for example, drought, cold temperature exposure, heat exposure, osmotic stress, flooding, increased soil salinity, increased mineral exposure, ozon exposure, high light exposure, limited availability of nitrogen nutrients, limited availability of phosphorus nutrients, shade avoidance.

Plants and plant cultivars which may also be treated according to the invention, are those plants characterized by enhanced yield characteristics. Increased yield in said plants can be the result of, for example, improved plant physiology, growth and development, such as water use efficiency, water retention efficiency, improved nitrogen use, enhanced carbon assimilation, improved photosynthesis, increased germination efficiency and accelerated maturation. Yield can furthermore be affected by improved plant architecture (under stress and non-stress conditions), including but not limited to, early flowering, flowering control for hybrid seed production, seedling vigor, plant size, internode number and distance, root growth, seed size, fruit size, pod size, pod or ear number, seed number per pod or ear, seed mass, enhanced seed filling, reduced seed dispersal, reduced pod dehiscence and lodging resistance. Further yield traits include seed composition, such as carbohydrate content, protein content, oil content and composition, nutritional value, reduction in anti-nutritional compounds, improved processability and better storage stability.

Plants that may be treated according to the invention are hybrid plants that already express the characteristic of heterosis or hybrid vigor which results in generally higher yield, vigor, health and resistance towards biotic and abiotic stress factors. Such plants are typically made by crossing an inbred male-sterile parent line (the female parent) with another inbred male-fertile parent line (the male parent). Hybrid seed is typically harvested from the male sterile plants and sold to growers. Male sterile plants can sometimes (e.g. in corn) be produced by detasseling, i.e. the mechanical removal of the male reproductive organs (or males flowers) but, more typically, male sterility is the result of genetic determinants in the plant genome. In that case, and especially when seed is the desired product to be harvested from the hybrid plants it is typically useful to ensure that male fertility in the hybrid plants is fully restored. This can be accomplished by ensuring that the male parents have appropriate fertility restorer genes which are capable of restoring the male fertility in hybrid plants that contain the genetic determinants responsible for male-sterility. Genetic determinants for male sterility may be located in the cytoplasm. Examples of cytoplasmic male sterility (CMS) were for instance described in Brassica species. However, genetic determinants for male sterility can also be located in the nuclear genome. Male sterile plants can also be obtained by plant biotechnology methods such as genetic engineering. A particularly useful means of obtaining male-sterile plants is described in WO 1989/10396 in which, for example, a ribonuclease such as barnase is selectively expressed in the tapetum cells in the stamens. Fertility can then be restored by expression in the tapetum cells of a ribonuclease inhibitor such as barstar.

Plants or plant cultivars (obtained by plant biotechnology methods such as genetic engineering) which may be treated according to the invention are herbicide-tolerant plants, i.e. plants made tolerant to one or more given herbicides. Such plants can be obtained either by genetic transformation, or by selection of plants containing a mutation imparting such herbicide tolerance.

Herbicide-tolerant plants are for example glyphosate-tolerant plants, i.e. plants made tolerant to the herbicide glyphosate or salts thereof. Plants can be made tolerant to glyphosate through different means. For example, glyphosate-tolerant plants can be obtained by transforming the plant with a gene encoding the enzyme 5-enolpyruvylshikimate-3-phosphate synthase (EPSPS). Examples of such EPSPS genes are the AroA gene (mutant CT7) of the bacterium *Salmonella typhimurium,* the CP4 gene of the bacterium *Agrobacterium sp.,* the genes encoding a Petunia EPSPS, a Tomato EPSPS, or an Eleusine EPSPS (WO 2001/66704). It can also be a mutated EPSPS. Glyphosate-tolerant plants can also be obtained by expressing a gene that encodes a glyphosate oxido-reductase enzyme. Glyphosate-tolerant plants can also be obtained by expressing a gene that encodes a glyphosate acetyl transferase enzyme. Glyphosate-tolerant plants can also be obtained by selecting plants containing naturally-occurring mutations of the abovementioned genes.

Other herbicide resistant plants are for example plants that are made tolerant to herbicides inhibiting the enzyme glutamine synthase, such as bialaphos, phosphinothricin or glufosinate. Such plants can be obtained by expressing an enzyme detoxifying the herbicide or a mutant glutamine synthase enzyme that is resistant to inhibition. One such efficient detoxifying enzyme is an enzyme encoding a phosphinothricin acetyltransferase (such as the bar or pat protein from Streptomyces species). Plants expressing an exogenous phosphinothricin acetyltransferase are described.

Further herbicide-tolerant plants are also plants that are made tolerant to the herbicides inhibiting the enzyme hydroxyphenylpyruvatedioxygenase (HPPD). Hydroxyphenylpyruvatedioxygenases are enzymes that catalyze the reaction in which para-hydroxyphenylpyruvate (HPP) is transformed into homogentisate. Plants tolerant to HPPD-inhibitors can be transformed with a gene encoding a naturally-occurring resistant HPPD enzyme, or a gene encoding a mutated HPPD enzyme. Tolerance to HPPD-inhibitors can also be obtained by transforming plants with genes encoding certain enzymes enabling the formation of homogentisate despite the inhibition of the native HPPD enzyme by the HPPD-inhibitor. Tolerance of plants to HPPD inhibitors can also be improved by transforming plants with a gene encoding an enzyme prephenate dehydrogenase in addition to a gene encoding an HPPD-tolerant enzyme.

Still further herbicide resistant plants are plants that are made tolerant to acetolactate synthase (ALS) inhibitors. Known ALS-inhibitors include, for example, sulfonylurea, imidazolinone, triazolopyrimidines, pyrimidinyloxy(thio)benzoates, and/or sulfonylaminocarbonyltriazolinone herbicides. Different mutations in the ALS enzyme (also known as acetohydroxyacid synthase, AHAS) are known to confer tolerance to different herbicides and groups of herbicides. The production of sulfonylurea-tolerant plants and imidazolinone-tolerant plants is described. Other imidazolinone-tolerant plants are also described. Further sulfonylurea- and imidazolinone-tolerant plants are also described.

Other plants tolerant to imidazolinone and/or sulfonylurea can be obtained by induced mutagenesis, selection in cell cultures in the presence of the herbicide or mutation breeding as described for soybeans, for rice, for sugar beet, for lettuce, or for sunflower.

Plants or plant cultivars (obtained by plant biotechnology methods such as genetic engineering) which may also be treated according to the invention are insect-resistant transgenic plants, i.e. plants made resistant to attack by certain target insects. Such plants can be obtained by genetic transformation, or by selection of plants containing a mutation imparting such insect resistance.

An "insect-resistant transgenic plant", as used herein, includes any plant containing at least one transgene comprising a coding sequence encoding:
1) an insecticidal crystal protein from *Bacillus thuringiensis* or an insecticidal portion thereof, such as the insecticidal crystal proteins listed at the *Bacillus thuringiensis* toxin nomenclature, online at:
   http://www.lifesci.sussex.ac.uk/Home/Neil_CrickmoreBt/), or insecticidal portions thereof, e.g., proteins of the Cry protein classes Cry1Ab, Cry1Ac, Cry1F, Cry2Ab, Cry3Aa, or Cry3Bb or insecticidal portions thereof; or
2) a crystal protein from *Bacillus thuringiensis* or a portion thereof which is insecticidal in the presence of a second other crystal protein from *Bacillus thuringiensis* or a portion thereof, such as the binary toxin made up of the Cry34 and Cry35 crystal proteins; or
3) a hybrid insecticidal protein comprising parts of different insecticidal crystal proteins from *Bacillus thuringiensis,* such as a hybrid of the proteins of 1) above or a hybrid of the proteins of 2) above, e.g., the Cry1A.105 protein produced by corn event MON98034; or
4) a protein of any one of 1) to 3) above wherein some, particularly 1 to 10, amino acids have been replaced by another amino acid to obtain a higher insecticidal activity to a target insect species, and/or to expand the range of target insect species affected, and/or because of changes introduced into the encoding DNA during cloning or transformation, such as the Cry3Bb1 protein in corn events MON863 or MON88017, or the Cry3A protein in corn event MIR604;
5) an insecticidal secreted protein from *Bacillus thuringiensis* or *Bacillus cereus,* or an insecticidal portion thereof, such as the vegetative insecticidal (VIP) proteins listed at:
   http://www.lifesci.sussex.ac.uk/home/Neil Crickmore/Bt/vip.html, e.g., proteins from the VIP3Aa protein class; or
6) a secreted protein from *Bacillus thuringiensis* or *Bacillus cereus* which is insecticidal in the presence of a second secreted protein from *Bacillus thuringiensis* or *B. cereus,* such as the binary toxin made up of the VIP1A and VIP2A proteins; or
7) a hybrid insecticidal protein comprising parts from different secreted proteins from *Bacillus thuringiensis* or *Bacillus cereus,* such as a hybrid of the proteins in 1) above or a hybrid of the proteins in 2) above; or
8) a protein of any one of 1) to 3) above wherein some, particularly 1 to 10, amino acids have been replaced by another amino acid to obtain a higher insecticidal activity to a target insect species, and/or to expand the range of target insect species affected, and/or because of changes introduced into the encoding DNA during cloning or transformation (while still encoding an insecticidal protein), such as the VIP3Aa protein in cotton event COT102.

Of course, an insect-resistant transgenic plant, as used herein, also includes any plant comprising a combination of genes encoding the proteins of any one of the above classes 1 to 8. In one embodiment, an insect-resistant plant contains more than one transgene encoding a protein of any one of the above classes 1 to 8, to expand the range of target insect species affected when using different proteins directed at different target insect species, or to delay insect resistance development to the plants by using different proteins insecticidal to the same target insect species but having a different mode of action, such as binding to different receptor binding sites in the insect.

Plants or plant cultivars (obtained by plant biotechnology methods such as genetic engineering) which may also be treated according to the invention are tolerant to abiotic stresses. Such plants can be obtained by genetic transformation, or by selection of plants containing a mutation imparting such stress resistance. Particularly useful stress tolerance plants include:
a. plants which contain a transgene capable of reducing the expression and/or the activity of poly(ADP-ribose)polymerase (PARP) gene in the plant cells or plants.
b. plants which contain a stress tolerance enhancing transgene capable of reducing the expression and/or the activity of the PARG encoding genes of the plants or plants cells.
c. plants which contain a stress tolerance enhancing transgene coding for a plant-functional enzyme of the nicotinamide adenine dinucleotide salvage synthesis pathway including nicotinamidase, nicotinate phosphoribosyltransferase, nicotinic acid mononucleotide adenyl transferase, nicotinamide adenine dinucleotide synthetase or nicotine amide phosphoribosyltransferase.

Plants or plant cultivars (obtained by plant biotechnology methods such as genetic engineering) which may also be treated according to the invention show altered quantity, quality and/or storage-stability of the harvested product and/or altered properties of specific ingredients of the harvested product such as :
1) transgenic plants which synthesize a modified starch, which in its physical-chemical characteristics, in particular the amylose content or the amylose/amylopectin ratio, the degree of branching, the average chain length, the side chain distribution, the viscosity behaviour, the gelling strength, the starch grain size and/or the starch grain morphology, is changed in comparison with the synthesised starch in wild type plant cells or plants, so that this is better suited for special applications. Said transgenic plants synthesizing a modified starch are disclosed.
2) transgenic plants which synthesize non starch carbohydrate polymers or which synthesize non starch carbohydrate polymers with altered properties in comparison to wild type plants without genetic modification. Examples are plants producing polyfructose, especially of the inulin and levan-type, plants producing alpha 1,4 glucans, plants producing alpha-1,6 branched alpha-1,4-glucans, plants producing alternan,
3) transgenic plants which produce hyaluronan.

Plants or plant cultivars (that can be obtained by plant biotechnology methods such as genetic engineering) which may also be treated according to the invention are plants, such as cotton plants, with altered fiber characteristics. Such plants can be obtained by genetic transformation, or by selection of plants contain a mutation imparting such altered fiber characteristics and include:
a) Plants, such as cotton plants, containing an altered form of cellulose synthase genes,
b) Plants, such as cotton plants, containing an altered form of rsw2 or rsw3 homologous nucleic acids,
c) Plants, such as cotton plants, with increased expression of sucrose phosphate synthase,
d) Plants, such as cotton plants, with increased expression of sucrose synthase,
e) Plants, such as cotton plants, wherein the timing of the plasmodesmatal gating at the basis of the fiber cell is altered, e.g. through downregulation of fiberselective β 1,3-glucanase,
f) Plants, such as cotton plants, having fibers with altered reactivity, e.g. through the expression of N-acteylglucosaminetransferase gene including nodC and chitinsynthase genes.

Plants or plant cultivars (that can be obtained by plant biotechnology methods such as genetic engineering) which may also be treated according to the invention are plants, such as oilseed rape or related Brassica plants, with altered oil profile characteristics. Such plants can be obtained by genetic transformation or by selection of plants contain a mutation imparting such altered oil characteristics and include:
a) Plants, such as oilseed rape plants, producing oil having a high oleic acid content,
b) Plants such as oilseed rape plants, producing oil having a low linolenic acid content,
c) Plant such as oilseed rape plants, producing oil having a low level of saturated fatty acids.

Particularly useful transgenic plants which may be treated according to the invention are plants which comprise one or more genes which encode one or more toxins, such as the following which are sold under the trade names YIELD GARD® (for example maize, cotton, soya beans), KnockOut® (for example maize), BiteGard® (for example maize), Bt-Xtra® (for example maize), StarLink® (for example maize), Bollgard® (cotton), Nucotn® (cotton), Nucotn 33B®(cotton), NatureGard® (for example maize), Protecta® and NewLeaf® (potato). Examples of herbicide-tolerant plants which may be mentioned are maize varieties, cotton varieties and soya bean varieties which are sold under the trade names Roundup Ready® (tolerance to glyphosate, for example maize, cotton, soya bean), Liberty Link® (tolerance to phosphinotricin, for example oilseed rape), IMI® (tolerance to imidazolinones) and STS® (tolerance to sulphonylureas, for example maize). Herbicide-resistant plants (plants bred in a conventional manner for herbicide tolerance) which may be mentioned include the varieties sold under the name Clearfield® (for example maize).

Particularly useful transgenic plants which may be treated according to the invention are plants containing transformation events, or combination of transformation events, that are listed for example in the databases from various national or regional regulatory agencies (see for example http://gmoinfo.jrc.it/gmp browse.aspx and http://www.agbios.com/dbase.php).

### Application Forms

The uses according to the invention can be employed for protecting plants against attack by the abovementioned pathogens within a certain period of time after the treatment. The period of time within which protection is effected generally extends from 1 to 10 days, preferably from 1 to 7 days, after the treatment of the plants with the active compounds. For storage diseases in fruits the period of time within which protection is effected generally extends from 1 to 6 months, particularly 1 to 30 days, most particularly from 1 to 10 days.

### Formulations

Depending on their respective physical and/or chemical properties, the active compounds can be converted to the customary formulations, such as solutions, emulsions, suspensions, powders, foams, pastes, granules, aerosols, very fine capsules in polymeric substances and in coating compositions for seed, and also ULV cold- and warm-fogging formulations.

These formulations are produced in a known manner, for example by mixing the active compounds with extenders, that is liquid solvents, pressurized liquefied gases and/or solid carriers, optionally with the use of surface-active agents, that is emulsifiers and/or dispersants and/or foam formers. If the extender used is water, it is also possible to employ for example organic solvents as cosolvents. Suitable liquid solvents are essentially: aromatics, such as xylene, toluene or alkylnaphthalenes, chlorinated aromatics or chlorinated aliphatic hydrocarbons, such as chlorobenzenes, chloroethylenes or methylene chloride, aliphatic hydrocarbons, such as cyclohexane or paraffins, for example mineral oil fractions, alcohols, such as butanol or glycol as well as their ethers and esters, ketones, such as acetone, methyl ethyl ketone, methyl isobutyl ketone or cyclohexanone, strongly polar solvents, such as dimethylformamide and dimethyl sulphoxide, and also water. Liquefied gaseous extenders or carriers are those liquids which are gaseous at ambient temperature and at atmospheric pressure, for example aerosol propellants such as halogenated hydrocarbons and also butane, propane, nitrogen and carbon dioxide. As solid carriers there are suitable: for example ground natural minerals, such as kaolins, clays, talc, chalk, quartz, attapulgite, montmorillonite or diatomaceous earth, and ground synthetic minerals, such as finely divided silica, alumina and silicates. As solid carriers for granules there are suitable: for example crushed and fractionated natural rocks such as calcite, pumice, marble, sepiolite and dolomite, and also synthetic granules of inorganic and organic meals, and granules of organic material such as sawdust, coconut shells, maize cobs and tobacco stalks. As emulsifiers and/or foam formers there are suitable: for example non-ionic and anionic emulsifiers, such as polyoxyethylene fatty acid esters, polyoxyethylene fatty alcohol ethers, for example alkylaryl polyglycol ethers, alkylsulphonates, alkyl sulphates, arylsulphonates and protein hydrolysates. As dispersants there are suitable: for example lignosulphite waste liquors and methylcellulose.

Tackifiers such as carboxymethylcellulose and natural and synthetic polymers in the form of powders, granules or latices, such as gum arabic, polyvinyl alcohol and polyvinyl acetate, as well as natural phospholipids, such as cephalins and lecithins, and synthetic phospholipids, can be used in the formulations. Other possible additives are mineral and vegetable oils.

It is possible to use colorants such as inorganic pigments, for example iron oxide, titanium oxide and Prussian Blue, and organic dyestuffs, such as alizarin dyestuffs, azo dyestuffs and metal phthalocyanine dyestuffs, and trace nutrients such as salts of iron, manganese, boron, copper, cobalt, molybdenum and zinc.

The formulations in general contain between 0.1 and 95 per cent by weight of active compounds, preferably between 0.5 and 90%.

The active compound combinations according to the invention can be employed as such, in the form of their formulations or the use forms prepared therefrom, such as ready-to-use solutions, suspensions, wettable powders, pastes, soluble powders, dusts and granules. They are applied in the customary manner, for example by pouring, spraying, atomizing, broadcasting, dusting, foaming, painting on and the like. It is furthermore possible to apply the active compounds by the ultra-low-volume method, or to inject the active compound preparation or the active compound itself into the soil. The seed of the plants can also be treated.

When employing the compound combinations according to the present invention as fungicides, the application rates can be varied within a substantial range, depending on the type of application. In the treatment of plant parts, the application rates of active compound are generally between 0.1 and 10 000 g/ha, preferably between 10 and 1000 g/ha. For the treatment of seed, the application rates of active compound are generally between 0.001 and 50 g per kilogram of seed, preferably between 0.01 and 10 g , most preferably 0,5 to 5g a.i. per kilogram of seed. For treating the soil, the application rates of active compound are generally between 0.1 and 10 000 g/ha, preferably between 1 and 5000 g/ha.

The treatment of the plants and parts of plants according to the invention with the active compounds is carried out directly or by action on their environment, habitat or storage area according to customary treatment methods, for example by dipping, spraying, evaporating, atomizing, broadcasting, brushing-on and, in the case of propagation material, in particular in the case of seeds, furthermore by one- or multilayer coating.

### Seed treatment

One of the advantages of the present invention is that, because of the particular systemic properties of the compositions according to the invention, treatment of the seed with these compositions not only protects the seed itself, but also the resulting plants after emergence, from phytopathogenic fungi. In this manner, the immediate treatment of the crop at the time of sowing or shortly thereafter can be dispensed with.

Furthermore, it must be considered as advantageous that the mixtures according to the invention can also be employed in particular in transgenic seed.

In the context of the present invention, the composition according to the invention is applied to the seed either alone or in a suitable formulation. Preferably, the seed is treated in a state which is stable enough to avoid damage during treatment. In general, the seed may be treated at any point in time between harvest and sowing. The seed usually used has been separated from the plant and freed from cobs, shells, stalks, coats, hairs or the flesh of the fruit. Thus, for example, it is possible to use seed which has been harvested, cleaned and dried to a moisture content of below 15% by weight. Alternatively, it is also possible to use seed which, after drying, has, for example, been treated with water and then dried again.

When treating the seed, care must generally be taken that the amount of the composition according to the invention applied to the seed and/or the amount of further additives is chosen in such a way that the germination of the seed is not adversely affected, or that the resulting plant is not damaged. This must be borne in mind in particular in the case of active compounds which may have phytotoxic effects at certain application rates.

The compositions according to the invention can be applied directly, that is to say without comprising further components and without having been diluted. In general, it is preferable to apply the composition to the seed in the form of a suitable formulation. Suitable formulations and methods for the treatment of seed are known to the skilled worker and are described, for example, in the following documents: US 4,272,417 A, US 4,245,432 A, US 4,808,430 A, US 5,876,739 A, US 2003/0176428 A1, WO 2002/080675 A1, WO 2002/028186 A2.

## Claims

1. Use of fluopyram for controlling *Podosphaera leuchotricha, Alternaria sp, Venturia sp., Stemphylium vesicarium, Gloeosporium fructigenum, Botrytis cinerea, Penicillium sp.* in apples and pears.

2. Use of fluopyram for controlling *Alternaria brassicae,Erysiphe polygoni, Erysiphe cruciferarum, Botrytis cinerea* in brassica vegetables.

3. Use of fluopyram for controlling *Helminthosporium sp,Erysiphe graminis, Oculimacula sp., Septoria tritici, Leptosphaeria nodorum* in cereals (except rice).

4. Use of fluopyram for controlling *Ramularia sp.* and *Glomerella sp.* in cotton.

5. Use of fluopyram for controlling *Botrytis cinerea, Erysiphe necator, Guignardia bidewellii,Phomopsis viticola, Aspergillus sp.* and *Penicillium sp.* in grapes.

6. Use of fluopyram for controlling *Botrytis cinerea, Sclerotinia sclerotiorum, Sclerotinia minor* in lettuce and leafy vegetables.

7. Use of fluopyram for controlling *Sclerotinia sclerotiorum, Erysiphe cruciferarum, Alternaria brassicae, Leptosphaeria maculans* in oil seed rape and canola.

8. Use of fluopyram for controlling *Botrytis cinerea* and *Sphaerotheca pannosa* in rose & flowers.

9. Use of fluopyram for controlling *Botrytis cinerea, Sclerotinia sclerotiorum* and *Alternaria sp.* in sunflower.
